# EUROPÄISCHE PATENTSCHRIFT

(11) **EP 3 969 411 B1**
(45) Veröffentlichungstag und Bekanntmachung des Hinweises auf die Patenterteilung: **15.07.2026**
(21) Anmeldenummer: 20723785.0
(22) Anmeldetag: 30.04.2020
(51) Int. Cl.: C01B 3/04, C01B 3/22, C01B 3/38, C01B 3/50, C01B 3/32, B01D 53/22

(54) **MEMBRANREFORMER**
MEMBRANE REFORMER
REFORMEUR À MEMBRANE

(30) Priorität: 14.05.2019 DE 102019112518
(43) Veröffentlichungstag der Anmeldung: 23.03.2022
(73) Patentinhaber: Karlsruher Institut für Technologie, 76131 Karlsruhe (DE)
(72) Erfinder: PFEIFER, Peter, 76351 Linkenheim-Hochstetten (DE); BÖLTKEN, Tim, 76135 Kalsruhe (DE); DÜRRSCHNABEL, Robin, 76437 Rastatt (DE); DITTMEYER, Roland, 76133 Karlsruhe (DE); HANSJOSTEN, Edgar, 76149 Karlsruhe (DE); GIETZELT, Thomas, 76137 Karlsruhe (DE); WUNSCH, Torsten, 76356 Weingarten (DE); DALLMANN, Felix, 76135 Karlsruhe (DE)
(86) Internationale Anmeldenummer: PCT/EP2020/025200
(87) Internationale Veröffentlichungsnummer: WO 2020/228982

(56) Entgegenhaltungen:
- US-A1- 2006 233 700
- US-A1- 2014 065 021
- US-A1- 2015 174 548
- US-A1- 2017 113 931

## Beschreibung

Die Erfindung betrifft einen Membranreformer, vorzugsweise einen Palladium-Membranreformer sowie eine Verwendung desselben zur Wasserstofferzeugung gemäß des ersten bzw. 23. Patentanspruchs.

Membranreformer der eingangs genannten Art dienen insbesondere einer Herstellung von Wasserstoff aus kohlenwasserstoff- oder alkoholhaltigen Gas und Wasserdampf oder Ammoniak. Insbesondere kleine Bauformen ermöglichen dabei einen dezentralen Einsatz. Bevorzugte Anwendungen finden sich folglich in der Versorgung von industriellen Kunden im Kapazitätsbereich unter 500 Nm³/h, wobei Membran-Reformereinheiten bei einer Wasserstoffversorgung aus dem Erdgasnetz eine kostengünstigere Alternative zu einem Einsatz von Flaschen- oder Flaschenbündeln bilden. Sie bieten damit eine ideale Wasserstoffquelle auch für H₂-Tankstellen oder Brennstoffzellensysteme für mobile oder stationäre Anwendungen.

Zu den einsetzbaren Kohlenwasserstoffen zählen sowohl gasförmige Substanzen, also beispielsweise Methan und Propan aber auch in die Dampfphase überführte Stoffe wie (Bio-)Ethanol oder höhermolekulare Substan-zen (Hexadekan) sowie mögliche ungesättigte oder partiell oxidierte Derivate (Alkene, Alkohole, Säuren etc.) .

Reiner Wasserstoff wird oftmals an vielen chemischen und sonstigen industriellen Standort in kleinen Mengen benötigt. Bisher ist die Erzeugung aus Methan (Erdgas) am günstigsten. Der Transport in Gasflaschen oder Tankwagen ist allerdings kostenintensiv und nicht nachhaltig. Daher stellen kleine kompakte Aggregate mit hoher Leistungsdichte und geringen Investitionskosten eine sehr attraktive Lösung dar. Auch der Brennstoffzellenmarkt sucht nach günstigen Optionen für die Wasserstoffversorgung.

Weitere wichtige Geschäftsfelder und lohnenswertes Segment ist die Versorgung von Industriekunden oder Wasserstofftankstellen mit Wasserstoff. Da der Wasserstofftransport sehr kostspielig ist und der Anteil transportierten Gewichts bei Wasserstoff sehr gering ist, lohnen sich Aggregate bis 500 Nm³/h zur Erzeugung von Wasserstoff über Membranreformer. Hier sind die Anschaffungskosten relativ schnell erwirtschaftet, da Erdgas kaum Kosten mit sich bringt.

Ein Ziel von Entwicklungen zum Membranreformer liegt in einer vereinfachten und energieeffizienten Herstellbarkeit von Wasserstoff aus kohlenwasserstoffhaltigem Gas und Wasser einerseits und der Reduzierung von Bauteilen sowie der Baugröße für dezentrale Anwendungen andererseits.

EP 1 669 323 A1 offenbart beispielhaft einen mikrostrukturierbaren Reaktor und Methode zur Herstellung von Wasserstoff aus Ethanol und Wasser. Der Wasserstoff wird durch eine Membran abgeleitet und so von den restlichen Reaktionsprodukten getrennt. Der Reaktor wird durch einen Plattenstapel mit Einzelplatten gebildet.

Auch sind Membranreformer für eine Beschleunigung einer Dehydrierung nutzbar, wobei die thermodynamische Randbedingung hinsichtlich eines größeren Umsatzes mit Abtrennung des entstehenden Wasserstoffs verschoben wird. Zu diesen Dehydrierungen zählen auch Anwendungen zur Wasserstoffspeicherung auf Basis flüssiger organischer Wasserstoffträger (kurz unter LOHC bekannt). Dort ist eine besonders kompakte und dynamische Betriebsweise mit hohen volumenspezifischen Wasserstofffreisetzungsraten oder Reaktionsraten gewünscht, um beispielsweise den Wasserstoff innerhalb kurzer Zeit in einen Druckspeicher zu entladen oder direkt in ein Brennstoffzellensystem zu speisen.

EP 2 578 532 A1 offenbart eine Nutzung einer Verbrennungszone, einer Reaktionszone mit integrierter Membran und einer Wasserstoffabzugszone. Die Abdichtung bzw. Verbindungstechnik erfolgt über Verschraubungen.

US 7 922 781 B1 beschreibt wie die vorgenannte EP 1 669 323 A1 ebenfalls eine Vorrichtung für die Wasserstofferzeugung mit einer Verbrennungszone, einer Reaktionszone mit integrierter Membran und einer Wasserstoffabzugszone. Auch werden einige prozesstechnische Ansprüche dargelegt; so soll z.B. das System mit der katalytischen Verbrennung von gespeichertem Wasserstoff angeheizt werden, bis der Zündpunkt des Katalysators für andere Stoffe erreicht ist. Die Umsetzung eines mehrlagigen Systems hinsichtlich der Stoffverteilung wird nicht diskutiert.

Die Nachteile der vorgenannten Systeme liegen in deren Handhabung, der komplexen Austauschbarkeit von Modulen sowie in der begrenzten Reinheit des abgetrennten Wasserstoffs. Insbesondere erfordern die Systeme oftmals die Abzweige der Medien, die senkrecht zur Strömungsrichtung in den einzelnen Modulen angeordnet sind.

Davon ausgehend liegt eine **Aufgabe der Erfindung** darin, einen Membranreformer der genannten Art sowie eine Verwendung desselben für eine vereinfachte und energieeffiziente Herstellung von reinem Wasserstoff aus kohlenwasserstoffhaltigem Gas und Wasser sicherer und effizienter zu gestalten, wobei die vorgenannten Nachteile vermieden werden sollen.

Gelöst wird die Aufgabe durch einen Membranreformer sowie einer Verwendung mit den Merkmalen des Anspruchs 1 bzw. 23. Hierauf rückbezogene Unteransprüche geben vorteilhafte Ausgestaltungen wieder.

Vorgeschlagen wird ein Membranreformer zur Erzeugung von Wasserstoff. Dieser umfasst eine erste Kavität (Vorreformierungszone, d.h. Vorreaktionszone ohne Membran) mit einem Katalysator und einem Zulauf für ein gasförmiges dehydrierbares Edukt, vorzugsweise zusammen mit Wasserdampf, in der die Erzeugung von Wasserstoff und mindestens einem weiteren Reaktionsprodukt durchgeführt wird. Es folgt eine der ersten Kavität nachgeschaltete zweite Kavität (vorzugsweise mit einem, weiter bevorzugt dem vorgenannten Katalysator der ersten Kavität entsprechend), in der die Erzeugung von Wasserstoff und mindestens einem weiteren Reaktionsprodukt unter gleichzeitiger Abtrennung des erzeugten Wasserstoffs über eine Membran und Einleitung in eine dritte Kavität weiter fortgesetzt wird, gefolgt von einer dritte Kavität mit einem Ablauf für Wasserstoff.

Vorzugsweise ist oder enthält das gasförmige dehydrierbare Edukt ein Kohlenwasserstoff, weiter bevorzugt ein Alkohol, vorzugsweise Methanol, Ethanol und/oder Ammoniak, und enthält weiter bevorzugt Wasserdampf.

Die Membran ist aus metallischem Werkstoff, enthaltend ein Metall oder hergestellt aus Metall. Sie ist flächig über eine poröse oder durchbrochene Folie aufgesetzt oder zwischen zwei poröse oder durchbrochene Folien eingesetzt. Die Membran befindet sich zwischen zweiter und dritter Kavität, die jeweils dabei unmittelbar an Membran oder Folie angrenzen.

Weiterhin umfasst der Membranreformer einen Ablauf für das kohlenwasserstoffhaltige Gas, das mindestens eine weitere Reaktionsprodukt sowie optional Wasserdampf aus der zweiten Kavität.

Der Membranreformer weist einen schichtweisen Aufbau auf, d.h. er wird durch einen Plattenstapel mit mehreren Einzelplatten (Platten, Folien) beidseitig der mindestens einen Membran gebildet. Die Kavitäten sind dabei durch Vertiefungen oder Durchbrüche in jeweils mindestens einer Platte gebildet.

Der Membranreformer eignet sich daher besonders für eine Miniaturisierung, bei der die Platten vorzugsweise eine Dicke von 10 bis 2000 µm, weiter bevorzugt von 20 bis 1000 µm, weiter bevorzugt zwischen 30 und 200 µm aufweist. Die lateralen Abmessungen der vorzugsweise rechteckigen oder quadratischen Einzelplatten eines solchen Mikromembranreformers liegen dabei vorzugswiese zwischen 10 und 300 mm, weiter bevorzugt zwischen 20, 30 oder 40 und 60, 80 oder 100 mm.

Jeder Übergang im Plattenstapel zwischen zwei Platten oder zwischen einer Platte und einer Folie oder Membran oder zwischen einer Membran und einer Folie wird durch um die Kavitäten und/oder Zu- und Ableitungen dichtend umlaufenden Schweißnähte gebildet. Die Schweißnähte verbinden jeweils zwei benachbarte Schichten, d.h. Einzelplatten, Membranen und/oder Folien miteinander. Eine Schweißnaht durchdringt vorzugsweise jeweils nur einen Übergang und die beiden angrenzenden Schichten, während die jeweils darauf folgende Schicht nach dem Verschweißen der Schweißnaht aufgelegt wird, mit diesem einen weiteren Übergang bildet und durch einen weiteren Schweißvorgang mit der benachbarten Schicht verschweißt wird. Die umlaufende Schweißnaht bildet in vorteilhafter Weise einen stofflichen Übergang zwischen zwei Schichten und bildet damit eine abdichtende Barriere im Übergang. Wesentlich ist, dass die Schweißnähte zwischen zwei im Plattenstapel benachbarten Übergängen versetzt und nicht kreuzend zueinander angeordnet sind, d.h. sich nicht berühren.

Die Art des Aufbaus der Verbindungstechnik durch Laser- oder Elektronenstrahlschweißen ermöglicht in vorteilhafter Weise auch eine verzugsfrei bzw. spannungsarme Gestaltung des Membranreformers, wodurch letztendlich einzelne Module mit je einer planaren Membranfläche aufbaubar sind und durch einen rechtwinklig zu den Zonen angeordnelen Medlenzugang über Dichtungen zu einem Gesamtpaket stapelbar sind, d.h. im Defektfall einzeln austauschbar sind.

Eine Ausgestaltung des Membranreformers zeichnet sich durch eine erste Kavität aus, die mit Partikeln eines Katalysators für die Umsetzung des dehydrierbaren Edukts gefüllt ist und/oder eine Wandung oder Wandungsbeschichtung aus dem Katalysator bestehen. Auf diese Weise findet der Beginn der Umsetzung bereits in der ersten Kavität statt, ohne dass dort eine Abtrennung von Wasserstoff erfolgt. Dadurch wird zunächst in Reaktionsrichtung ein Wasserstoffpartialdruck erzeugt. Der Umsatz ist genügend klein, um noch keine Gleichgewichtslimitierung der Reaktion hervorzurufen. Die Anordnung vermeidet eine eventuelle Rückführung von Wasserstoff in die Reaktionsmischung, die Auftreten könnte, wenn der gesamte Reaktionsraum mit einer wasserstoffdurchlässigen Membran überspannt wäre.

Eine weitere Ausgestaltung des Membranreformers sieht vor, dass die zweite Kavität mit Partikeln eines Katalysators für die Umsetzung des dehydrierbaren Edukts gefüllt ist und/oder eine Wandung oder Wandungsbeschichtung aus dem Katalysator bestehen. Die Umsetzung wird in der zweiten Kavität lediglich fortgesetzt, während erst hier dazu parallel eine Membranabtrennung von Wasserstoff erfolgt. Der Wasserstoffpartialdruck in der Gasphase wird durch die Abtrennung erniedrigt, so dass auch weiter keine Gleichgewichtslimitierung der Reaktion stattfindet. Damit lassen sich höhere Umsätze für das dehydrierbare Edukt erzielen.

Der vorgenannte Katalysator für die Umsetzung des dehydrierbaren Edukts ist oder enthält vorzugsweise Platin, Palladium, Nickel und/oder Kupfer. Weiter bevorzugt weist der Katalysator eine erhöhte spezifische Oberfläche auf, die für Umsetzung des dehydrierbaren Edukts zugänglich ist. Die Bereitstellung der großen Oberfläche erfolgt vorzugsweise in der Form einer zerklüfteten Oberflächentopographie oder eine offene Porosität oder bei Partikeln alternativ oder zusätzlich eine geringe Partikelgröße, vorzugsweise zwischen 10¹ und 10⁴ nm Partikelgröße.

Der Membranreformer ist vorzugsweise weiterhin so ausgestaltet, dass die jeweils beidseitig über eine Membran angeordnete zweite und dritte Kavitäten einen gemeinsamen Membranbereich über der Membran und der einen Folie oder den beiden Folien überdeckungsgleich überspannen. Damit wird sichergestellt, dass eine maximale Wirkungsfläche für den Transport des Wasserstoffs durch die Membran zu Verfügung steht.

Die Folie oder die beiden Folien um den Membranbereich weisen weiterhin bevorzugt einen umlaufenden dichten Bereich auf, der weder durchbrochen noch porös ist. Dies dient der Sicherstellung, dass ein Stoffaustrag, vorzugsweise gebildet durch den abzuführenden Wasserstoff, ausschließlich über die Membran abgeführt wird.

In die dritte Kavität ist in einer vorteilhaften Ausgestaltung zusätzlich ein Zulauf für ein Spülgas vorgesehen. Durch den Einsatz von Spülgas erniedrigt sich der Wasserstoffpartialdruck in der dritten Kavität. Dies erhöht den Parameterraum für den Einsatz des Gerätes, da Wasserstoff auch relativ niedrigen Wasserstoffpartialdrücken abgeführt werden kann. Zweckmäßigerweise ist dabei der Ablauf für Wasserstoff zugleich auch ein Ablauf für das Spülgas. Weiter bevorzugt ist dabei zwischen Ablauf und Zulauf ein überwiegender Volumenanteil der dritten Kavität angeordnet.

Für die Kavitäten, insbesondere der ersten beiden Kavitäten sind vorzugsweise Temperierungsmittel, vorzugweise ein Kanalsystem für ein Temperierungsfluid vorgesehen. Hiermit lassen sich in vorteilhafter Weise die Temperatur und damit die Reaktionen in der ersten Kavität steuern oder nach oben und/oder nach unten begrenzen. Das bevorzugte Kanalsystem umfasst weiter bevorzugt Vertiefungsstrukturen in mindestens einer Platte oder Folie für die Hindurchleitung eines Temperierungsfluids und weisen weiter bevorzugt keine fluidische Verbindung zu den vorgenannten Kavitäten einschließlich der Zu-, Ab- und Verbindungsleitungen auf.

Alternativ umfassen die genannten Temperierungsmittel in einer weiteren möglichen Ausgestaltung eine katalytische Verbrennung der Restanteile des im Ablauf der zweiten Kavität enthaltenen dehydrierbaren Edukts, von nicht abgetrennten Wasserstoff und/oder sonstiger brennbarer Produkte an einem geeigneten Katalysator, wobei der Katalysator in einem Kanalsystem, umfassend Vertiefungsstrukturen in mindestens einer Einzelplatte des Plattenstapels für die Hindurchleitung des Ablaufs der zweiten Kavität gemischt mit Luft angeordnet ist.

Eine bevorzugte Ausführung des Membranreformers sieht eine Ausgestaltung der Zu- und Abläufe in der Weise vor, dass die Membranreformer sich mit weiteren Membranreformern vorzugsweise gleicher Bauart zu einer Membranreformersystem parallel zusammensetzen und betreiben lassen. Diese Ausführung sieht Zu- und Abläufe zu bzw. von den Kavitäten vor, die in Sammelkanäle aus bzw. einmünden. Die Sammelkanäle durchdringen vorzugsweise orthogonal die Platten (Folien) des Plattenstapels, wobei die Platten im Übergang zu den jeweiligen benachbarten Platten nicht nur über um die Kavitäten und/oder Zu- und Ableitungen, sondern auch durch die Sammelkanäle dichtend umlaufende Schweißnähte mit den jeweiligen benachbarten Patten oder Membranen verbunden sind. Wesentlich hierbei ist, dass die Schweißnähte zwischen zwei benachbarten Übergängen versetzt und nicht kreuzend zueinander angeordnet sind. Durchdringen die Sammelkanäle dabei orthogonal den gesamten Plattenstapel, lassen sich insbesondere gleichartige Membranreformer mit gleichen Abmessungen aufeinanderstapeln, wobei die Sammelkanäle der jeweiligen fluchten aneinanderreihen. Eine Ausgestaltung sieht daher vor, dass die Sammelkanäle geradlinig und orthogonal zu den Platten den Plattenstapel durchdringen.

Alternativ bietet es sich an, zumindest die Anordnung der Aus- und Einlässe der Sammelkanäle insbesondere in den jeweiligen abschließenden Platten oder Folien Platten einheitlich anzuordnen.

Eine bevorzugte Ausgestaltung sieht zudem vor, dass mindestens ein Zu- und/oder Ablauf aus einer Kavität ein einer ersten Platte in einen Sammelkanal durch einen Durchbruch einer zweiten Platte sowie weiterhin durch eine rillenförmige Vertiefung in einer dritten Platte zum Sammelkanal hin erfolgt.

Die eingesetzten Membranen des Membranreformers sind vorzugsweise zwischen 1, 2 oder 3 und 10, 20 oder 40 µm dick. Vorzugsweise bei dem vorgenannten Mikromembranreformer liegen die Dicken bevorzugt zwischen 1 und 10 µm.

Die Durchlässigkeit der Membran für Wasserstoff muss gegeben sein, vorzugsweise ist diese Durchlässigkeit der Membran für Wasserstoff selektiv. Hierfür eignen sich insbesondere eine Membran aus Palladium oder einer Palladiumlegierung. Alternativ enthält eine solche Membran Palladium oder eine Palladiumlegierung. Weiter bevorzugt sind die Membranen durch einen Walz- oder einen Sputterprozess hergestellt. Eine alternative Herstellung sieht vor, die Membran auf einer porösen (offenporös) oder durchbrochene Folie als Trägersubstrat (Stützplatte) aufzubauen, vorzugsweise über einen Sputterprozess direkt auf die Folie aufgedampft oder alternativ, chemisch abgeschieden. Die poröse oder durchbrochene Folie besteht aus einem Metall und ist vorzugweise zwischen 30 und 200 µm dick.

Die Kavitäten im Plattenstapel sind vorzugsweise übereinander angeordnet und erstrecken sich jeweils in einer Platte rechteckig, vorzugsweise als Vertiefungen oder Durchbrüche in den Platten. Ferner sind die Zu- und Abläufe vorzugsweise schlitzförmig und überspannten dabei jeweils einen überwiegenden Anteil einer Seite einer rechteckigen Kavität.

Ein besonderer Vorteil des beschriebenen Aufbaus und der vorgenannten Ausgestaltungen im Rahmen eines Plattenstapels mit Einzelplatten liegt in der Miniaturisierbarkeit und in der Verschaltung einer Vielzahl von kleinen und damit thermisch gut steuerbaren Membranreformer zu Membranreformersystemen.

Die Erfindung wird anhand von Ausführungsbeispielen, den folgenden Figuren und Beschreibungen näher erläutert. Die dargestellten Merkmale und deren Kombinationen sind nicht nur auf diese Ausführungsbeispiele und deren Ausgestaltungen begrenzt. Vielmehr sind diese stellvertretend für weitere mögliche, aber nicht explizit als Ausführungsbeispiele dargestellte weitere Ausgestaltungen kombinierbar. Es zeigen
**Fig.1** eine schematische Prinzipskizze eines Membranreformers,
**Fig.2** prinzipielle Explosionsansichten mit der Darstellung aller Platten eines Plattenstapels einer Ausführungsform eines Membranreformers in zwei Perspektiven,
**Fig.3** prinzipielle Explosionsansichten mit der Darstellung aller Platten eines Plattenstapels einer weiteren Ausführungsform eines Membranreformers in zwei Perspektiven,
**Fig.4** eine perspektivische Ansicht einer Ausgestaltung einer durchbrochenen Folie als Trägersubstrat (Stützplatte) für die Membran sowie
**Fig.5** eine Darstellung aus einer Umsetzung von Methan mit Wasserdampf Methanumsatz X_{CH4} als Funktion der Wasserstoffrückgewinnungsrate φ_{H2} für acht verschiedene Betriebspunkte.

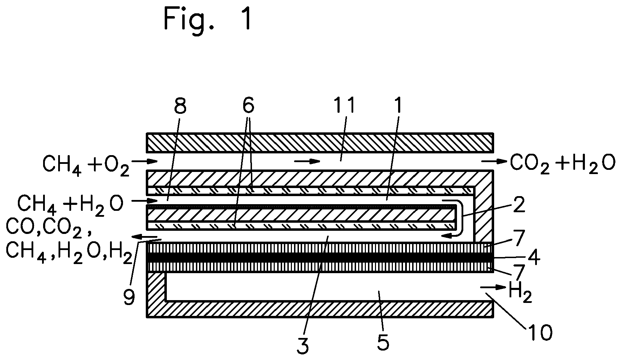

Den prinzipiellen grundsätzlichen Aufbau eines beispielhaften Membranreaktors sowie die in diesen geführte Stoffströme zeigen **Fig.1** in einer prinzipiellen Querschnittsdarstellung.

Der Membranreformer umfasst im Wesentlichen eine erste Kavität **1** als Vorreformierungsstufe, die nach einer Strömungsumlenkung **2** in eine zweite Kavität **3** als Reformierungsstufe übergeht, eine dritte Kavität **5** sowie eine zwischen zweiter und dritter Kavität angeordnete wasserstoffdurchlässige Membran **4.** Die erste und zweite Kavität weist ferner abseits der Membran einen Katalysatorschicht **6** an den Wandungen der Kavität auf. Die Membran selbst ist zwischen zwei durchbrochene Folien **7** als Trägersubstrate (Stützplatten) eingesetzt.

Durch einen Zulauf **8** erfolgt eine Einleitung eines gasförmigen dehydrierbaren Edukts, im Beispiel CH₄ und H₂O, in die erste Kavität. Es erfolgt in der ersten Kavität eine Vorreformierung, d.h. eine beginnende Reaktion des Edukts in Wasserstoff und einem weiteren Reaktionsprodukt unter Einwirkung des vorgenannten Katalysators. Bei laufender Reaktion erfolgt eine Weiterleitung des Reaktionsgemisches über die Strömungsumlenkung in die zweite Kavität **3** und damit auch zur Membran **4,** in der die Reaktion fortgeführt, gleichzeitig aber der sich bildende Wasserstoff über die Membran in die dritte Kavität **5** übergeleitet wird. Während ein Restanteil von Wasserstoff (H₂), ein nicht umgesetzter Rest des Edukts (CH₄, H₂O, d.h. kohlenwasserstoffhaltige Gas) sowie die weiteren Reaktionsprodukte (CO, CO₂) über einen Ablauf **9** aus der zweiten Kavität ausgeleitet werden, erfolgt eine Ableitung des Wasserstoffs (H₂) über einen Auslass **10** aus der dritten Kavität.

Ferner in **Fig.1** dargestellt ist ein Kanal **11,** in dem ein Brennstoff (z.B. CH₄) mit Sauerstoff (O₂) eingeleitet wird, und dort unter Ausbildung von Wärme oxidiert (insbesondere zu CO₂ und Wasser) und nach rechts aus den Kanal ausgeleitet wird. Die dabei entstehende Wärme dient als Temperierungsmittel für den Membranreformer, d.h. sie wird über die Kanalwandung insbesondere zu den vorgeannten Kavitäten übertragen. Eine fluidische Verbindung zwischen dem Kanal und einem der Kavitäten besteht dabei vorzugsweise nicht.

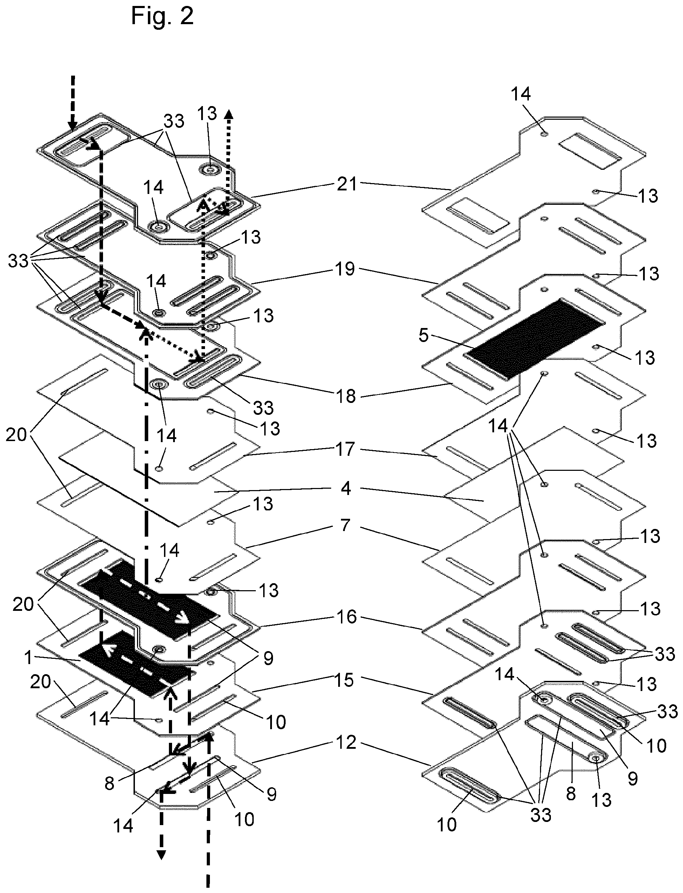

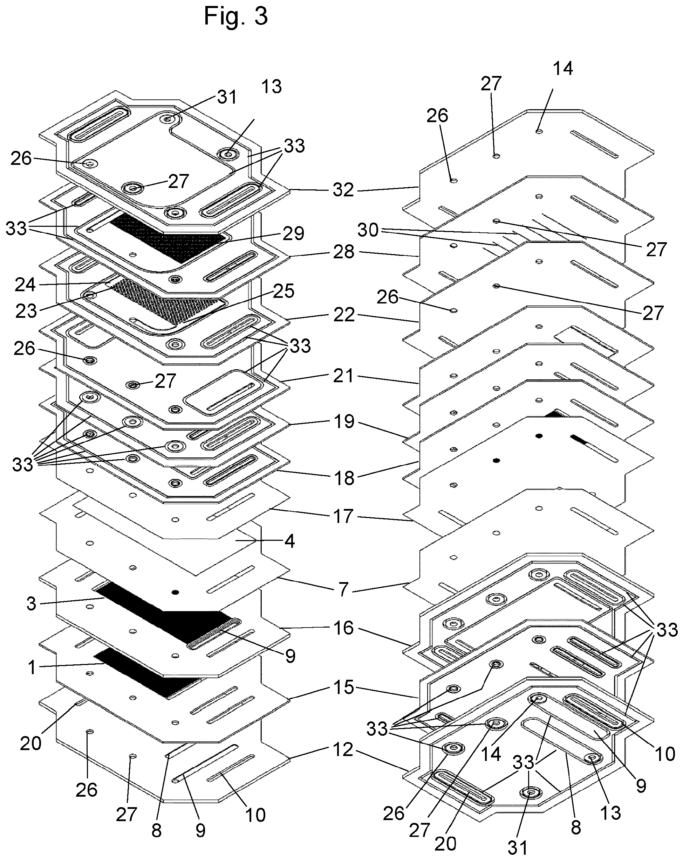

Bevorzugte Ausführungen des durch einen Plattenstapels realisierten Membranreformers findet sich in **Fig.2** **und** **3** als Explosionszeichnungen von schräg oben (links) und von schräg unten (rechts). Die insbesondere in **Fig.2** links dargestellten Pfeile geben die Stoffströme im Membranreformer wieder. Die Folien des Plattenstapels sind vorzugsweise aus einem korrosionsbeständigen Stahl und haben vorzugsweise die gleichen Außenabmessungen, wobei die lateralen Erstreckungen und die Anordnungen der ersten, zweiten und dritten Kavität auf den jeweiligen Folien vorzugsweise gleich sind.

**Fig.2** gibt eine Ausführungsform ohne Temperierungsmittel wieder, während **Fig.3** diese Temperierungsmittel in separaten zusätzlichen Folien aufweist.

Eine Beschreibung der einzelnen Folien (Einzelplatten) des Plattenstapels erfolgt nachfolgend, beginnend mit der untersten Folie:
- Die untere Abschlussfolie **12** ist ein dichtender Abschluss des Membranreformers nach unten. Er weist lediglich einen Zulauf **8** für ein gasförmiges dehydrierbares Edukt aus einem alle Folien durchdringenden ersten Sammelkanal **13** sowie einen Teil des Ablaufs **9** für ein Restanteil von Wasserstoff, ein nicht umgesetzter Rest des Edukts sowie die weiteren Reaktionsprodukte in einen alle Folien durchdringenden zweiten Sammelkanal **14** auf. Ab- und Zulauf sind auf der unteren Abschlussfolie als rillenförmige Vertiefungen dargestellt. Ferner durchdringen je ein ebenfalls alle Folien durchdringender Auslass **10** für Wasserstoff aus der dritten Kavität sowie ein Spülgaskanal **20** für die Zuleitung eines Spülgases in die dritte Kavität die untere Abschlussfolie.
- Die Vorreformierungsfolie **15** weist als vorzugsweise rechteckige flächige Vertiefung die erste Kavität auf, in die vorzugsweise über die eine gesamte Stirnseite der vorgenannte Zulauf ausmündet. Die Wandungen der Kavität sind vorzugsweise mit einem Katalysator der vorgenannten Art beschichtet. In der dem Zulauf gegenüberliegenden Stirnseite mündet die erste Kavität in die Strömungsumlenkung aus, womit in der Kavität eine möglichst gleichförmiger Strömungsquerschnitt realisierbar ist.
- Es folgt die Reformierungsfolie **16** mit der zweiten Kavität, ebenfalls mit Wandungen, die mit Katalysator beschichtet sind. Ebenfalls wird das Reaktionsgemisch wie in der ersten Kavität über eine Stirnseite aus der Strömungsumlenkung eingeleitet und über die gegenüberliegenden Stirnseite über den Ablauf **9** ausgeleitet, womit sich auch hier ein möglichst gleichförmiger Strömungsquerschnitt ausbildet.
- Die Reformierungsfolie ist mit einer vorzugsweise nur im Erstreckungsbereich der zweiten Kavität durchbrochenen Folien **7** als Trägersubstrate (Stützplatten) für die Membran abgedeckt. Auf der durchbrochenen Folie liegt die Membran **4** auf, die sich vorzugsweise - wie dargestellt - nur über die die zweite und dritte Kavität und nicht über die vorgenannten Sammelkanäle erstreckt. Vorzugsweise ist die Membran - wie ebenfalls dargestellt - zwischen der vorgenannten durchbrochenen Folie **7** und einer zweiten durchbrochenen Folie **17** angeordnet.
- Es folgt die Wasserstoffabfuhrfolie **18** mit der als Vertiefung ausgearbeiteten und zur zweiten durchbrochenen Folie **17** hin weisenden dritten Kavität **5,** wobei jene zur Membran hin den gleichen Erstreckungsbereich wie die zweite Kavität überspannt.
- Die folgende Umlenkfolie **19** und die obere Abschlussfolie **21** dienen insbesondere der Umlenkung des Spülgases aus dem Spülgaskanal **20** in die Dritte Kavität sowie der Umlenkung des Spülgases mit dem durch die Membran abgetrennten Wasserstoff aus der dritten Kavität in den Auslass **10.** Die Umlenkfolie **19** ermöglicht in vorteilhafter Weise die vorzugsweise vorgeschlagene Verbindung der Folien untereinander, wobei jeder Übergang im Plattenstapel zwischen zwei Platten oder zwischen einer Platte und einer Folie oder Membran oder zwischen einer Membran und einer Folie durch um die Kavitäten und/oder Zu- und Ableitungen dichtend umlaufenden Schweißnähte gebildet ist sowie die Schweißnähte zwischen zwei im Plattenstapel benachbarten Übergängen versetzt und nicht kreuzend zueinander angeordnet sind. Die Umlenkungen selbst sind im Wesentlichen als Vertiefungen auf der Unterseite der oberen Abschlussfolie dargestellt. Vorzugsweise sind die Öffnungen von unterer und oberer Abschlussfolie deckungsgleich, sodass eine Parallelschaltung mehrerer Membranreformer über eine Anordung derer übereinander realisierbar ist.

**Fig.3** zeigt zudem noch drei weitere Folien, die die Temperierungsmittel für den Membranreformer umfassen. Im Gegensatz zu **Fig.1** sind diese hier nicht unmittelbar benachbart zur Vorreformierungsstufe (ersten Kavität **1)**, sondern über der oberen Abschlussfolie **21** d.h. angrenzend zur dritten Kavität **5** angeordnet.
- Über der oberen Abschlussfolie **21** ist eine Brennkammerfolie **22** angeordnet, in der eine Brennkammer **23** als Vertiefung eingearbeitet ist. Die laterale Erstreckung der bevorzugt quaderförmigen Brennkammer auf der Brennkammerfolie entspricht vorzugsweise der der vorgenannten Kavitäten. Ferner ist ein bevorzugt über eine gesamte Stirnfläche der Brennkammer einmündender Brenngaszulauf **24** für ein bevorzugt gasförmiges Brenngas sowie ein bevorzugt auf der gegenüberliegenden Stirnfläche der Brennkammer ausmündender Abgasablauf **25** vorgesehen, wobei Brenngaszulauf und Abgasablauf jeweils fluidisch, vorzugsweise als rillenförmige Vertiefungen ausgestaltet, an je einen Brenngassammelkanal **26** bzw. Abgassammelkanal **27** angebunden sind. Brenngassammelkanal und Abgassammelkanal durchdringen vorzugsweise, wie zuvor für die Sammelkanäle für Edukte und Reaktionsprodukte beschrieben, alle Folien des Plattenstapels, vorzugsweise orthogonal zu den Folien.
- Auf die Brennkammerfolie **22** ist eine Luftverteilerfolie **28** mit einem als Vertiefung oben eingebrachten Verteilervolumen **29** angeordnet. Die unten plane Luftverteilerfolie schließt vorzugsweise die die Brennkammer **23** bildende Vertiefung nach oben hin ab. Die Erstreckung des Verteilervolumens entspricht der der darunter angeordneten Brennkammer. Luftdurchführungen **30** vom Verteilervolumen zur Brennkammer, die über die gesamte Erstreckung vorgesehen sind, ermöglichen eine Luftzufuhr über das gesamte Brennkammervolumen und damit eine flächige Verbrennung in der Brennkammer. Das Verteilervolumen ist fluidisch (rillenförmige Vertiefung) an einen Luftsammelkanal **31** angeschlossen, der wiederum bevorzugt alle Folien des Plattenstapels durchdringt, vorzugsweise orthogonal zu den Folien.
- Über der Luftverteilerfolie **28** ist eine obere Temperierungsmittelabdeckfolie **32** vorgesehen, die im Beispiel das Verteilervolumen nach oben hin begrenzt.

In **Fig.2** **und** **3** sind zudem auf den Folien diverse Schweißlinien **33** dargestellt, die bevorzugt durch Laserschweißungen gebildet sind. Die Schweißlinien geben die Linien an, die von dem Laserstrahl der Schweißanlage vorzugsweise auch angefahren werden. Die Verschweißungen entlang der Schweißlinien verbinden den Übergang bevorzugt von jeweils zwei Folien, in den dargestellten Ausgestaltungen die jeweilige Folie mit der jeweils darunter angeordneten benachbarten Folie (weiter bevorzugt ausgenommen Lochfolien **7** und **17** sowie der Membran). Jeder Übergang im Plattenstapel zwischen zwei Platten oder zwischen einer Platte und einer Folie oder Membran oder zwischen einer Membran und einer Folie durch um die Kavitäten und/oder Zu- und Ableitungen wird nach außen dichtend von einer der umlaufenden Schweißnaht abgeschlossen. Wesentlich bei einer solchen bevorzugten Ausgestaltung der Fügetechnik ist, dass die Schweißlinien von zwei benachbarten Übergängen sich nicht kreuzen, überschneiden oder auf eine sonstige Weise überlappen. Folglich sind die Schweißnähte zwischen zwei im Plattenstapel benachbarten Übergängen versetzt und nicht kreuzend zueinander angeordnet.

Im Inneren des Membranreaktors werden die umlaufenden Schweißlinien genutzt, um eine Abdichtung von innen nach außen und zwischen den einzelnen Folien zu realisieren. Die Schweißung erfolgt vorzugsweise mit einem Laserstrahl senkrecht zu den einzelnen Folien.

Insbesondere wird eine Überscheidung der Schweißlinien vermieden. Bei übereinander liegenden Platten, die eine Durchführung bzw. umlaufende Abdichtungsnut aufweisen, wird außerdem eine abwechselnde Abfolge von kleineren und größeren Radien der umlaufenden Nut (bei sonst gleichem Nutmaß) realisiert, damit die Nahtwurzel nicht auf die Nut der darunterliegenden Schweißung trifft und eine zuverlässige Abdichtung und Druckfestigkeit gewährleistet ist.

Außerdem erfolgt die Schweißung von der Anordnung der Platten ausgehend von der zentralen Platte mit der Membran vorzugsweise abwechselnd von beiden Seiten, um den Verzug zu minimieren und eine Planparallelität für die Folien im Plattenstapel zu gewährleisten.

Eine bevorzugte Schweißreihenfolge für eine in **Fig.2** dargestellte Ausgestaltung des Membranreformers ist:
- Verbindung des Übergangs zwischen Vorreformierungsfolie **15** und Reformierungsfolie **16,**
- anschließende Durchschweißung von Wasserstoffabfuhrfolie **18** durch die darunterliegenden Folien bis auf die Reformierungsfolie **16** (d.h. Verschweißung mehrerer Übergänge zugleich);
- danach Anbindung der unteren Abschlussfolie **12** von unten;
- abschließend erst Anbindung der Umlenkfolie **19** und dann der oberen Abschlussfolie **21.**

Für eine Fügung der Folien einer in **Fig.3** dargestellte Ausführung wird zunächst vorzugsweise auf die vorgenannte Reihenfolge verwiesen, gefolgt von einem folienweise Ansetzen und Anschwei-βen der Folien für eine Temperierung (Brennkammerfolie **22,** Luftverteilerfolie **28** und Temperierungsmittelabdeckfolie **32**)**,** wobei hier jeweils nur ein Übergang auf einmal verschweißt werden.

Ein zentrales Element des Designs betrifft die Umlenkfolie **19,** die es erlaubt, eine gemeinsame Verbindungsstelle zum Wasserstoffabzug (Kanal **10**) und zum Spülgaskanal **20** auf den Folien herzustellen, ohne dass ein Übertritt des Spülgases vom Spülgaskanal zum Kanal abseits der dritten Kavität **5** auf der Unterseite der Wasserstoffabfuhrfolie **18** stattfinden kann.

Weitere Vorteile gründen in der Führung der Strömung in der ersten und zweiten Kavität. Beispielsweise ermöglicht eine Vorreformierung in der Vorreformierungsfolie **15** den Aufbau eines Wasserstoffpartialdruckes durch Reaktion vor dem Kontakt mit der Membran. Die Strömungsumlenkung **2** zwischen erster und zweiter Kavität stellt wiederum einen Strömungswiderstand zwischen dar. Dieser fördert einerseits eine über die Stirnfläche gleichmäßige Einströmung in die zweite Kavität und behindert andererseits eine Rückströmung von Fluidbestandteilen von der zweiten Kavität zurück in die erste Kavität.

Die Membran **4** ist beidseitig jeweils von einer durchbrochenen Folie **7** und **17** (vorzugsweise 50 µm dick und mit 70 µm Durchbrüche versehen) zur Stabilisierung eingerahmt. Vorzugsweise entspricht die Außenabmessung der durchbrochenen Folien denen der anderen Folien des Membranreformers. Weiter bevorzugt erstrecken sich die Durchbrüche lateral auf die Membran und/oder nur in dem Bereich der zweiten und dritten Kavität, während der restliche Bereich keine Durchbrüche aufweist.

Vorzugsweise stellt ein nicht offenporiger Rand eines offenporigen Membransupports (Folie **7** und **17**) die Abdichtung der Membran nach außen sicherstellt. Die Pd-haltige Membranfolie vorzugsweise aus Pd oder PdAg) ist vorzugsweise nur 3 bis 20 µm dick (gewalzt oder gesputtert). Eine Ausgestaltung sieht vor, die Membran direkt auf zumindest eine der offenporigen Folien **7** oder **17** aufzubauen: zuerst eine keramische poröse Schicht als Diffusionsbarriere für Metallatome ins Palladium; darauf dann Abscheidung von Pd oder dessen Legierungen auf verschiedenem Weg, bspw. Sputtern, stromlos abscheiden, elektrochemisch, oder auch über ein Suspensionsplasmaspritzen.

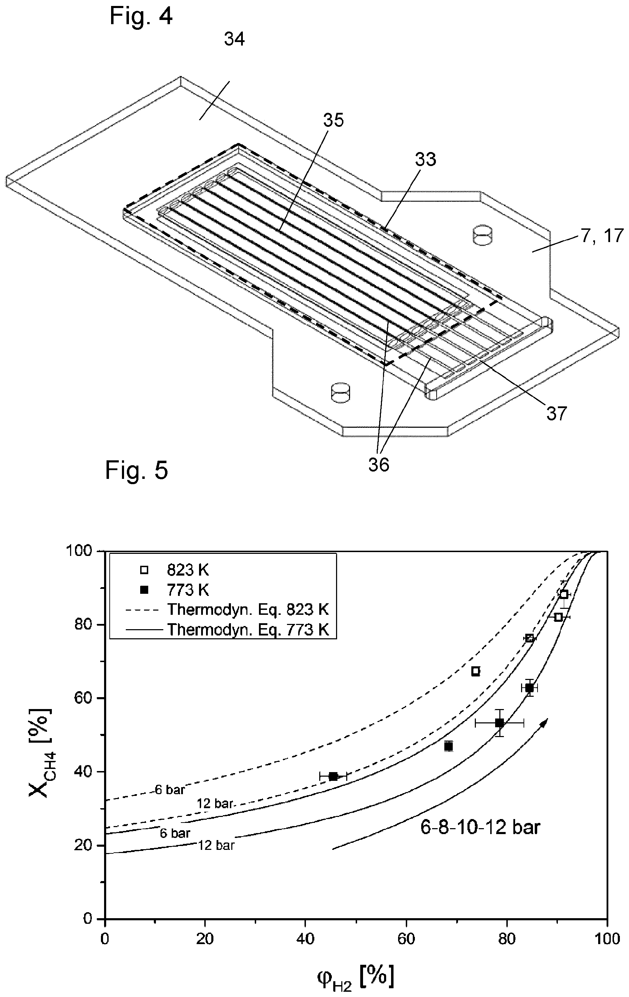

Eine alternative Ausgestaltung der Folien **7** und **17** für die Membran ermöglicht ein Lasersinterverfahren, bei dem mit einem dichten Rand **34** in die Form des oben gezeigten Reaktors gebracht wird (**Fig.4**). Wesentlich bei dieser Ausgestaltung ist, dass das Lasersintern im inneren offenporigen Bereich **35** einen Aufbau von zusätzlichen rillenförmigen Kanälen **36** ermöglicht, die gleichzeitig als Wasserstoffabfuhrkanäle, d.h. als Teil der dritten Kavität nutzbar sind. Eine Beschichtung mit Membranmaterial oder Auflegen einer Membran ist dann sowohl auf der Oberseite als auch der Unterseite der dargestellten Folie möglich, womit der Reformer zusätzlich noch kompakter gestaltbar wird. Wichtig ist dabei, dass die Kanäle sich auch über den porösen Bereich **35** und der Schweißlinie **33** hinaus im dichten Rand **34** fortsetzen und in einem Langloch **37** o.ä. enden, damit der abgetrennte Wasserstoff der verschiedenen Module gesammelt werden kann.

**Fig.5** zeigt Versuchsergebnisse aus einer Umsetzung von Methan mit Wasserdampf (Methanumsatzrate X_{CH4} [%]) in Abhängigkeit von der H₂-Rückgewinnungsrate φ_{H2} [%] für acht unterschiedliche Betriebspunkte. Die Linien geben berechnete Gleichgewichtsbedingungen wieder. Experimentelle Werte bei Drücken von je 6, 8, 10 und 12 bar (von links nach rechts) bei 773 K (schwarz gefüllte Symbole) und 823 K (weiß gefüllte Symbole), einem konstanten W/F-Verhältnis von 0.33 g_{Kat}h/mol_{CH4} und einem S/C-Verhältnis von 3. Dabei gibt S/C das molare Verhältnis von Dampf zu Kohlenstoff (im Methan) an. W/F ist das Verhältnis Katalysatormasse zu Molenstrom Methan.

### Bezugszeichenliste:

- 1: erste Kavität
- 2: Strömungsumlenkung
- 3: zweite Kavität
- 4: Membran
- 5: dritte Kavität
- 6: Katalysatorschicht
- 7: durchbrochene Folie
- 8: Zulauf
- 9: Ablauf
- 10: Auslass
- 11: Kanal
- 12: Abschlussfolie
- 13: erster Sammelkanal für Edukte
- 14: zweiter Sammelkanal für Reaktionsprodukte
- 15: Vorreformierungsfolie
- 16: Reformierungsfolie
- 17: zweite durchbrochene Folie
- 18: Wasserstoffabfuhrfolie
- 19: Umlenkfolie
- 20: Spülgaskanal
- 21: Abschlussfolie
- 22: Brennkammerfolie
- 23: Brennkammer
- 24: Brenngaszulauf
- 25: Abgasablauf
- 26: Brenngassammelkanal
- 27: Abgassammelkanal
- 28: Luftverteilerfolie
- 29: Verteilervolumen
- 30: Luftdurchführungen
- 31: Luftsammelkanal
- 32: Temperierungsmittelabdeckfolie
- 33: Schweißlinien
- 34: dichter Rand
- 35: offenporiger Bereich
- 36: rillenförmige Kanäle
- 37: Langloch

## Patentansprüche

1. Membranreformer zur Erzeugung von Wasserstoff, umfassend
a) eine erste Kavität **(1)** mit einem Katalysator und einem Zulauf **(8)** für ein gasförmiges dehydrierbares Edukt, in der die Erzeugung von Wasserstoff und mindestens einem weiteren Reaktionsprodukt durchgeführt wird,
b) eine der ersten Kavität nachgeschaltete zweite Kavität **(3),** in der die Erzeugung von Wasserstoff und mindestens einem weiteren Reaktionsprodukt unter gleichzeitiger Abtrennung des erzeugten Wasserstoffs über eine Membran und Einleitung in eine dritte Kavität weiter fortgesetzt wird,
c) eine dritte Kavität **(5)** mit einem Ablauf **(10)** für Wasserstoff,
d) eine Membran **(4)** aus metallischem Werkstoff, enthaltend ein Metall oder hergestellt aus Metall sowie flächig aufgesetzt über eine poröse oder durchbrochene Folie **(7)** oder eingesetzt zwischen zwei poröse oder durchbrochene Folien **(7, 17)** sowie eingesetzt zwischen zweiter und dritter Kavität **(5),** die jeweils unmittelbar an Membran oder Folie angrenzen,
e) einen Ablauf **(9)** für das kohlenwasserstoffhaltige Gas, das mindestens eine weitere Reaktionsprodukt sowie Wasserdampf aus der zweiten Kavität **(3),**
f) wobei der Membranreformer durch einen Plattenstapel mit mehreren Einzelplatten beidseitig der mindestens einen Membran gebildet wird sowie
g) wobei die Kavitäten durch Vertiefungen oder Durchbrüche in jeweils mindestens einer Platte gebildet werden,
wobei
h) jeder Übergang im Plattenstapel zwischen zwei Platten oder zwischen einer Platte und einer Folie oder Membran oder zwischen einer Membran und einer Folie durch um die Kavitäten und/oder Zu- und Ableitungen dichtend umlaufenden Schweißnähte gebildet ist sowie
i) die Schweißnähte zwischen zwei im Plattenstapel benachbarten Übergängen versetzt und nicht kreuzend zueinander angeordnet sind.

2. Membranreformer nach Anspruch 1, **dadurch gekennzeichnet, dass** die erste Kavität mit Partikeln des Katalysators für die Umsetzung des dehydrierbaren Edukts gefüllt ist und/oder eine Wandung oder Wandungsbeschichtung aus dem Katalysator bestehen.

3. Membranreformer nach Anspruch 1 oder 2, **dadurch gekennzeichnet, dass** die zweite Kavität mit Partikeln eines Katalysators für die Umsetzung des dehydrierbaren Edukts gefüllt ist und/oder eine Wandung oder Wandungsbeschichtung aus dem Katalysator bestehen.

4. Membranreformer nach einem der vorgenannten Ansprüche, **dadurch gekennzeichnet, dass** der Katalysator für die Umsetzung des dehydrierbaren Edukts Platin, Palladium, Nickel und/oder Kupfer enthält.

5. Membranreformer nach einem der vorgenannte Ansprüche, **dadurch gekennzeichnet, dass** die jeweils beidseitig über eine Membran angeordnete zweite und dritte Kavitäten einen gemeinsamen Membranbereich über der Membran und der einen Folie oder den beiden Folien überdeckungsgleich überspannen.

6. Membranreformer nach einem der vorgenannten Ansprüche, **dadurch gekennzeichnet, dass** die eine Folie oder die beiden Folien um den Membranbereich einen umlaufenden dichten Bereich aufweisen, der weder durchbrochen noch porös ist.

7. Membranreformer nach einem der vorgenannten Ansprüche, **dadurch gekennzeichnet, dass** in die dritte Kavität zusätzlich eine Zulauf für ein Spülgas vorgesehen ist und der Ablauf für Wasserstoff zugleich auch ein Ablauf für das Spülgas ist.

8. Membranreformer nach Anspruch 7, **dadurch gekennzeichnet dass** zwischen Ablauf und Zulauf ein überwiegender Volumenanteil der dritten Kavität angeordnet ist.

9. Membranreformer nach einem der vorgenannten Ansprüche, **dadurch gekennzeichnet, dass** Temperierungsmittel für die erste Kavität vorgesehen sind.

10. Membranreformer nach Anspruch 9, **dadurch gekennzeichnet, dass** die Temperierungsmittel durch ein Kanalsystem, umfassend Vertiefungsstrukturen in mindestens einer Platte für die Hindurchleitung eines Temperierungsfluids gebildet ist.

11. Membranreformer nach Anspruch 9, **dadurch gekennzeichnet, dass** die Temperierungsmittel eine katalytische Verbrennung der Restanteile des im Ablauf der zweiten Kavität enthaltenen dehydrierbaren Edukts, von nicht abgetrennten Wasserstoff und/oder sonstiger brennbarer Produkte an einem geeigneten Katalysator umfassen, wobei der Katalysator in einem Kanalsystem, umfassend Vertiefungsstrukturen in mindestens einer Einzelplatte des Plattenstapels für die Hindurchleitung des Ablaufs der zweiten Kavität gemischt mit Luft angeordnet ist.

12. Membranreformer nach einem der vorgenannten Ansprüche, **dadurch gekennzeichnet, dass**
a) die Zu- und Abläufe zu bzw. von den Kavitäten in Sammelkanäle aus bzw. einmünden,
b) die Sammelkanäle die Platten des Plattenstapels durchdringen sowie
c) die Platten im Übergang zu den jeweiligen benachbarten Platten nicht nur über um die Kavitäten und/oder Zu- und Ableitungen, sondern auch durch die Sammelkanäle dichtend umlaufende Schweißnähte mit den jeweiligen benachbarten Patten oder Membranen verbunden sind,
d) wobei die Schweißnähte zwischen zwei benachbarten Übergängen versetzt urd nicht kreuzend zueinander angeordnet sind.

13. Membranreformer nach Anspruch 12, **dadurch gekennzeichnet, dass** mindestens ein Zu- und/oder Ablauf aus einer Kavität ein einer ersten Platte in einen Sammelkanal durch einen Durchbruch einer zweiten Platte sowie weiterhin durch eine rillenförmige Vertiefung in einer dritten Platte zum Sammelkanal hin erfolgt.

14. Membranreformer nach Anspruch 12 oder 13, **dadurch gekennzeichnet, dass** die Sammelkanäle geradlinig und orthogonal zu den Platten den Plattenstapel durchdringen.

15. Membranreformer nach einem der vorgenannten Ansprüche, **dadurch gekennzeichnet, dass** die Membran zwischen 3 und 20µm dick ist.

16. Membranreformer nach einem der vorgenannten Ansprüche, **dadurch gekennzeichnet, dass** die Durchlässigkeit der Membran für Wasserstoff selektiv ist.

17. Membranreformer nach Anspruch 16, **dadurch gekennzeichnet, dass** die Membran aus Palladium oder einer Palladiumlegierung besteht oder Palladium oder eine Palladiumlegierung enthält.

18. Membranreformer nach Anspruch 16 oder 17, **dadurch gekennzeichnet, dass** die Membran durch einen Walz- oder einen Sputterprozess hergestellt ist.

19. Membranreformer nach einem der Ansprüche 16 bis 18, **dadurch gekennzeichnet, dass** eine der Folien porös ist und die Membran über einen Sputterprozess direkt auf die Folie aufgesputtert oder chemisch abgeschieden ist.

20. Membranreformer nach einem der vorgenannten Ansprüche, **dadurch gekennzeichnet, dass** die eine oder zwei poröse oder durchbrochene Folien aus einem Metall sind und zwischen 30 und 200µm dick sind.

21. Membranreformer nach einem der vorgenannten Ansprüche, **dadurch gekennzeichnet, dass** die Kavitäten im Plattenstapel übereinander angeordnet sind, sich jeweils in einer Platte rechteckig erstrecken sowie die Zu- und Abläufe schlitzförmig sind und jeweils einen überwiegenden Anteil einer Seite einer rechteckigen Kavität überspannen.

22. Membranreformersystem, umfassend einen Plattenstapel mit mindestens zwei im Plattenstapel übereinander angeordneten Membranreformer nach einem der vorgenannten Ansprüche.

23. Verwendung eines Membranreformers nach Anspruch 1 zur Erzeugung von Wasserstoff, **dadurch gekennzeichnet, dass** das gasförmige dehydrierbare Edukt Wasserdampf enthält.

24. Verwendung eines Membranreformers nach Anspruch 1 zur Erzeugung von Wasserstoff, **dadurch gekennzeichnet, dass** das dehydrierbare Edukt ein Kohlenwasserstoff ist oder umfasst.

25. Verwendung eines Membranreformers nach Anspruch 1 zur Erzeugung von Wasserstoff, **dadurch gekennzeichnet, dass** das dehydrierbare Edukt ein Alkohol, vorzugsweise Methanol oder Ethanol ist oder umfasst.

26. Verwendung eines Membranreformers nach Anspruch 1 zur Erzeugung von Wasserstoff, **dadurch gekennzeichnet, dass** das dehydrierbare Edukt Ammoniak ist oder umfasst.

## Claims

1. Membrane reformer for generating hydrogen, comprising
a) a first cavity (1) with a catalyst and a feed (8) for a gaseous dehydrogenatable reactant, in which hydrogen and at least one other reaction product is generated,
b) a second cavity (3) arranged downstream of the first cavity and in which hydrogen and at least one other reaction product are further generated while simultaneously separating the generated hydrogen via a membrane and introducing same into a third cavity,
c) a third cavity (5) with a discharge (10) for hydrogen,
d) a membrane (4) made of a metallic material, containing a metal or made of metal and placed flat over a porous or perforated film (7) or inserted between two porous or perforated films (7, 17) and inserted between the second and third cavity (5), each of which directly adjoins the membrane or film,
e) a discharge (9) for the hydrocarbon-containing gas, the at least one further reaction product and water vapour from the second cavity (3),
f) wherein the membrane reformer is made of a plate stack with multiple individual plates on both sides of the at least one membrane, and
g) wherein the cavities are formed by means of depressions or perforations in, in each case, at least one plate, wherein
h) each transition in the plate stack between two plates or between one plate and a film or membrane or between a membrane and a film is formed by weld seams forming a seal around the cavities and/or feed and outlet lines, and
i) the weld seams are offset between two adjacent transitions in the plate stack and are arranged not to cross each other.

2. Membrane reformer according to claim 1, **characterised in that** the first cavity is filled with particles of the catalyst for the conversion of the dehydrogenatable reactant and/or a wall or wall coating consists of the catalyst.

3. Membrane reformer according to claim 1 or 2, **characterised in that** the second cavity is filled with particles of a catalyst for the conversion of the dehydrogenatable reactant and/or a wall or wall coating consists of the catalyst.

4. Membrane reformer according to one of the preceding claims, **characterised in that** the catalyst for the conversion of the dehydrogenatable reactant contains platinum, palladium, nickel and/or copper.

5. Membrane reformer according to one of the preceding claims, **characterised in that** the second and third cavities arranged in each case over a membrane on both sides, span and fully overlap a common membrane area over the membrane and the one film or both films.

6. Membrane reformer according to one of the preceding claims, **characterised in that** the one film or both films around the membrane area have a peripheral sealed area which is neither perforated nor porous.

7. Membrane reformer according to one of the preceding claims, **characterised in that** a feed is provided for a purge gas into the third cavity and the discharge for hydrogen is at the same time also a discharge for the purge gas.

8. Membrane reformer according to claim 7, **characterised in that** a predominant volume portion of the third cavity is arranged between the discharge and feed.

9. Membrane reformer according to one of the preceding claims, **characterised in that** temperature control means are provided for the first cavity.

10. Membrane reformer according to claim 9, **characterised in that** the temperature control means is formed by a channel system, comprising depression structures in at least one plate for the passage of a temperature control fluid.

11. Membrane reformer according to claim 9, **characterised in that** the temperature control means comprise a catalytic combustion of the remaining fractions of the dehydrogenatable reactant contained in the discharge of the second cavity, from non- separated hydrogen and/or other combustible products on a suitable catalyst, wherein the catalyst is arranged in a channel system, comprising depression structures in at least one of the individual plates of the plate stack for the passage of the discharge of the second cavity mixed with air.

12. Membrane reformer according to one of the preceding claims, **characterised in that**
a) the feeds and discharges to and from the cavities start and end in collector channels,
b) the collector channels go through the plates of the plate stack and
c) the plates in the transition to their respective adjacent plates are connected to the respective adjacent plates or membranes not only via the weld seams forming a seal around the cavities and/or feed and discharge lines, and also by the collector channels,
d) wherein the weld seams are offset between two adjacent transitions and arranged not to cross each other.

13. Membrane reformer according to claim 12, **characterised in that** at least one feed and/or discharge from a cavity in a first plate takes place in a collector channel through a perforation of a second plate and further through a groove-shaped depression in a third plate to the collector channel.

14. Membrane reformer according to claim 12 or 13, **characterised in that** the collector channels perforate the plate stack in a straight line and orthogonally to the plates.

15. Membrane reformer according to one of the preceding claims, **characterised in that** the membrane is between 3 and 20µm thick.

16. Membrane reformer according to one of the preceding claims, **characterised in that** the permeability of the membrane is selective for hydrogen.

17. Membrane reformer according to claim 16, **characterised in that** the membrane is made of palladium or a palladium alloy or contains palladium or a palladium alloy.

18. Membrane reformer according to claim 16 or 17, **characterised in that** the membrane is made by a rolling or sputtering process.

19. Membrane reformer according to one of claims 16 to 18, **characterised in that** one of the films is porous and the membrane is sputtered via a sputtering process or deposited by a chemical process directly onto the film.

20. Membrane reformer according to one of the preceding claims, **characterised in that** the one or two porous or perforated films are made of metal and are between 30 and 200µm thick.

21. Membrane reformer according to one of the preceding claims, **characterised in that** the cavities are arranged one over the other in the plate stack, extend in each case rectangularly in a plate, and the feeds and discharges are slot-shaped and each span the predominant portion of one side of a rectangular cavity.

22. Membrane reformer system comprising a plate stack with at least two membrane reformers arranged one over the other in the plate stack according to one of the preceding claims.

23. Use of a membrane reformer according to claim 1 for the generation of hydrogen, **characterised in that** the gaseous dehydrogenatable reactant contains water vapour.

24. Use of a membrane reformer according to claim 1 for the generation of hydrogen, **characterised in that** the dehydrogenatable reactant is or contains hydrocarbon.

25. Use of a membrane reformer according to claim 1 for the generation of hydrogen, **characterised in that** the dehydrogenatable reactant is or contains an alcohol, preferably methanol or ethanol.

26. Use of a membrane reformer according to claim 1 for the generation of hydrogen, **characterised in that** the dehydrogenatable reactant is or contains ammonia.

## Revendications

1. Reformeur à membrane pour la production d'hydrogène, comprenant
a) une première cavité **(1)** ayant un catalyseur et une arrivée **(8)** d'un éduit gazeux déshydratable, dans laquelle s'effectue la production d'hydrogène et d'au moins un autre produit de réaction,
b) une deuxième cavité **(3),** qui est en aval de la première cavité, et dans laquelle la production d'hydrogène et d'au moins un autre produit de réaction se poursuit avec séparation simultanée de l'hydrogène produit par une membrane et envoi dans une troisième cavité,
c) une troisième cavité **(5)** ayant une évacuation **(10)** de l'hydrogène,
d) une membrane **(4)** en matériau métallique, contenant un métal ou fabriquée en un métal, ainsi que posée à plat sur une feuille **(7)** poreuse ou interrompue, ou insérée entre deux feuilles **(7, 17)** poreuses ou interrompues, ainsi qu'insérée entre la deuxième et la troisième cavité **(5),** qui sont chacune directement voisines de la membrane ou de la feuille,
e) une évacuation **(9)** pour le gaz hydrocarboné, qui comprend au moins un autre produit de réaction ainsi que de la vapeur d'eau provenant de la deuxième cavité **(3),**
f) dans lequel le reformeur à membrane est formé d'un empilement de plaques ayant plusieurs plaques individuelles de part et d'autre d'au moins une membrane ainsi que
g) dans lequel les cavités sont formées par des creux ou des traverses respectivement dans au moins une plaque,
dans lequel
h) chaque transition dans l'empilement de plaques entre deux plaques ou entre une plaque et une feuille ou membrane ou entre une membrane et une feuille est formée par des cordons de soudure entourant, de manière étanche, les cavités et/ou des conduits d'arrivée et d'évacuation ainsi que
i) les cordons de soudure sont disposés d'une manière décalée et sans se croiser entre deux transitions voisines dans l'empilement de plaques.

2. Reformeur à membrane suivant la revendication 1, **caractérisé en ce que** la première cavité est remplie de particules de catalyseur pour la transformation de l'éduit déshydratable et/ou est constituée d'une paroi ou d'un revêtement de parois en le catalyseur.

3. Reformeur à membrane suivant la revendication 1 ou 2, **caractérisé en ce que** la deuxième cavité est remplie de particules d'un catalyseur pour la transformation de l'éduit déshydratable et/ou est constituée d'une paroi ou d'un revêtement de paroi en le catalyseur.

4. Reformeur à membrane suivant l'une des revendications précédentes, **caractérisé en ce que** le catalyseur de transformation de l'éduit déshydratable contient du platine, du palladium, du nickel et/ou du cuivre.

5. Reformeur à membrane suivant l'une des revendications précédentes, **caractérisé en ce que** les deuxième et troisième cavités disposées respectivement de part et d'autre d'une membrane s'étendent en coïncidence sur une partie commune de membrane sur la membrane et la une feuille ou les deux feuilles.

6. Reformeur à membrane suivant l'une des revendications précédentes, **caractérisé en ce que** la une feuille ou les deux feuilles ont, autour de la partie de membrane, une partie étanche faisant le tour, qui n'est ni interrompue, ni poreuse.

7. Reformeur à membrane suivant l'une des revendications précédentes, **caractérisé en ce qu'**il est prévu dans la troisième cavité supplémentairement une arrivée de gaz de lavage et l'évacuation de l'hydrogène en même temps qu'également une évacuation du gaz de lavage.

8. Reformeur à membrane suivant la revendication 7, **caractérisé en ce que**, entre l'évacuation et l'arrivée, est disposée une proportion prépondérante en volume de la troisième cavité.

9. Reformeur à membrane suivant l'une des revendications précédentes, **caractérisé en ce qu'**il est prévu des moyens de mise en température de la première cavité.

10. Reformeur à membrane suivant la revendication 9, **caractérisé en ce que** les moyens de mise en température sont constitués par un système de conduit comprenant des structures en creux dans au moins une plaque pour le passage d'un fluide de mise en température.

11. Reformeur à membrane suivant la revendication 9, **caractérisé en ce que** les moyens de mise en température comprennent une combustion catalytique des proportions restantes de l'éduit déshydratable contenu dans l'évacuation de la deuxième cavité d'hydrogène non séparé et/ou d'autres produits combustibles sur un catalyseur approprié, dans lequel le catalyseur est disposé dans un système de conduit comprenant des structures de cavité dans au moins une plaque individuelle de l'empilement de plaques pour le passage de l'évacuation de la deuxième cavité mélangée à de l'air.

12. Reformeur à membrane suivant l'une des revendications précédentes, **caractérisé en ce que**
a) les arrivées dans et les évacuations des cavités débouchent dans des conduits collecteurs,
b) les conduits collecteurs traversent les plaques de l'empilement de plaques ainsi que
c) les plaques dans la transition vers les plaques voisines respectives sont reliées aux plaques ou membranes voisines respectives non seulement par des cordons de soudure faisant le tour, d'une manière étanche, des cavités et/ou des arrivées et évacuations, mais également passant par les conduits de collecte,
d) dans lequel les cordons de soudure sont disposés de manière décalée et sans se croiser, les uns les autres entre deux transitions voisines.

13. Reformeur à membrane suivant la revendication 12, **caractérisé en ce qu'**au moins une arrivée et/ou une évacuation s'effectue d'une cavité d'une première plaque dans un conduit de collecte par une traversée d'une deuxième plaque ainsi que plus loin par une cavité en forme de rainure dans une troisième plaque au conduit de collecte.

14. Reformeur à membrane suivant la revendication 12 ou 13, **caractérisé en ce que** les conduits de collecte traversent l'empilement de plaque en ligne droit et orthogonalement aux plaques.

15. Reformeur à membrane suivant l'une des revendications précédentes, **caractérisé en ce que** la membrane a une épaisseur comprise entre 3 et 20 µm.

16. Reformeur à membrane suivant l'une des revendications précédentes, **caractérisé en ce que** la perméabilité de la membrane est sélective pour l'hydrogène.

17. Reformeur à membrane suivant la revendication 16, **caractérisé en ce que** la membrane est en palladium ou en alliage de palladium ou contient du palladium ou un alliage de palladium.

18. Reformeur à membrane suivant la revendication 16 ou 17, **caractérisé en ce que** la membrane est fabriquée par une opération de laminage ou de pulvérisation.

19. Reformeur à membrane suivant l'une des revendications 16 à 18, **caractérisé en ce que** l'une des feuilles est poreuse et la membrane est pulvérisée directement sur la feuille par une opération de pulvérisation ou est déposée chimiquement.

20. Reformeur à membrane suivant l'une des revendications précédentes, **caractérisé en ce que** la une ou deux feuilles poreuses ou ininterrompues sont en un métal et ont une épaisseur comprise entre 30 et 200 µm.

21. Reformeur à membrane suivant l'une des revendications précédentes, **caractérisé en ce que** les cavités sont disposées de manière superposée dans l'empilement de plaques, s'étendent respectivement angulairement dans une plaque, tandis que les arrivées et les évacuations sont en forme de fentes et recouvrent respectivement une proportion prépondérante d'une face d'une cavité rectangulaire.

22. Système de reformeur à membrane, comprenant un empilement de plaques ayant au moins deux reformeurs à membrane suivant l'une des revendications précédentes, disposés l'un au-dessus de l'autre dans l'empilement de plaques.

23. Utilisation d'un reformeur à membrane suivant la revendication 1 pour la production d'hydrogène, caractérisé, l'éduit gazeux déshydratable contient de la vapeur d'eau.

24. Utilisation d'un reformeur à membrane suivant la revendication 1 pour la production d'hydrogène, **caractérisé en ce que** l'éduit déshydratable est un hydrocarbure ou en comprend.

25. Utilisation d'un reformeur à membrane suivant la revendication 1 pour la production d'hydrogène, caractérisé en que l'éduit déshydratable est un alcool, de préférence du méthanol ou de l'éthanol, ou en comprend.

26. Utilisation d'un reformeur à membrane suivant la revendication 1 pour la production d'hydrogène, **caractérisé en ce que** l'éduit déshydratable est de l'ammoniac ou en comprend.
